# EUROPÄISCHE PATENTSCHRIFT

(11) **EP 3 314 536 B1**
(45) Veröffentlichungstag und Bekanntmachung des Hinweises auf die Patenterteilung: **19.01.2022**
(21) Anmeldenummer: 16726288.0
(22) Anmeldetag: 12.05.2016
(51) Int. Cl.: G06K 19/07, B25F 5/00, H04R 25/00

(54) **IDENTIFIKATIONSMODUL**
IDENTIFICATION MODULE
MODULE D'IDENTIFICATION

(30) Priorität: 24.06.2015 DE 102015211686
(43) Veröffentlichungstag der Anmeldung: 02.05.2018
(73) Patentinhaber: Robert Bosch GmbH, 70442 Stuttgart (DE)
(72) Erfinder: FREIENSTEIN, Heiko, 71263 Weil der Stadt (DE); VISEL, Benjamin, 75378 Bad Liebenzell-Moettlingen (DE); STEURER, Christoph, 73660 Urbach (DE); MOENNICH, Joerg, 70437 Stuttgart (DE); HERR, Tobias, 70569 Stuttgart (DE); KOENIG, Anja, 72770 Reutlingen (DE)
(86) Internationale Anmeldenummer: PCT/EP2016/060672
(87) Internationale Veröffentlichungsnummer: WO 2016/206859

(56) Entgegenhaltungen:
- DE-A1- 10 238 710
- DE-A1-102005 053 821
- DE-A1-102006 046 801
- DE-A1-102011 050 393
- DE-A1-102011 089 499
- DE-U1-202004 020 457
- DE-U1-202005 010 622
- DE-U1-202008 012 687
- DE-U1-202014 006 084
- US-A1- 2005 197 093
- US-A1- 2008 238 609
- US-A1- 2013 267 247

## Beschreibung

Die Erfindung betrifft ein Identifikationsmodul für Mobilgeräte, insbesondere Handwerkzeugmaschinen, mit einem Gehäuse, das Mittel zur Anordnung/Befestigung des Identifikationsmoduls an einem Mobilgerät aufweist, mit einem Transponder, der einen Datenspeicher zum Speichern von Identifikationsdaten sowie ein Funkmodul zum drahtlosen Versenden dieser Identifikationsdaten aufweist, und mit einem Energiespeicher zur elektrischen Versorgung des Transponders.

### Stand der Technik

Identifikationsmodule der eingangs genannten Art sind aus dem Stand der Technik bekannt. Zur Inventarisierung von mobilen Gegenständen, insbesondere Mobilgeräten, wie beispielsweise elektrisch betrieben Handwerkzeugmaschinen oder auch Zubehör, wie beispielsweise elektrische Leiter, Kabeltrommeln, Werkzeuge oder Dergleichen, erfolgt im Handwerkbereich vorwiegend durch eine manuelle Kennzeichnung in Form einer Inventarnummer oder Seriennummer. Der Lagerbestand wird häufig handschriftlich auf Papier oder per Software dokumentiert. Hierbei werden häufig jedem Gegenstand auch noch weitere Attribute, wie beispielsweise aktueller Lagerort, Benutzungsort, zugeordneter Mittarbeiter, Prüfzyklen, Benutzungsdauer oder dergleichen zugeordnet.

Um die Inventarisierung zu erleichtern ist es außerdem bereits bekannt, die mobilen Gegenstände mit jeweils einem Identifikationsmodul zu versehen, das auf den jeweiligen Gegenstand aufgeklebt werden kann. Das Identifikationsmodul weist einen Transponder zur drahtlosen Kommunikation auf, sowie ein Speicher, in welchem Identifikationsdaten abrufbar hinterlegt werden können, sowie einen Energiespeicher, der den Transponder mit elektrischer Energie versorgt.

Offenlegungsschrift US 2013/0267247 A1 beschreibt bereits ein Identifikationsmodul für Mobilgeräte, wobei das Identifikationsmodul ein an dem Mobilgerät anordenbares Gehäuse, einen Datenspeicher, ein Funkmodul und einen Energiespeicher aufweist. Dokument US 2005/0197093 A1 beschreibt weiterhin einen Barcodescanner, welcher ein Gehäuse aufweist, das durch einen Deckel verschließbar ist. Aus der Offenlegungsschrift DE 10 2011 050393 A1 geht außerdem bereits ein Gehäuse mit einem abnehmbaren Deckel hervor, in welches ein Austauschelement, beispielsweise eine Batterie, eine ID-Karte oder dergleichen, angeordnet werden können. Die Gebrauchsmusterschrift DE 20 2004 020457 U1 betrifft darüber hinaus ein Taschenwerkzeug, welches ein erstes Funktionsteil beispielsweise in Form einer Schere und ein zweites Funktionsteil in Form eines elektrischen Speichermoduls, beispielsweise eines USB-Sticks, aufweist. DE 20 2008 012687 U1 beschreibt einen USB-Speicherstick mit einem Audiomodul, wobei der Speicherstick eine Leiterplatte aufweist. Aus der US 2008/0238609 A1 ist weiterhin ein elektrisches Handwerkzeug, welches mittels einer externen Bedieneinrichtung ansteuerbar ist, bekannt.

### Offenbarung der Erfindung

Die Erfindung ist in Anspruch 1 definiert. Die abhängigen Ansprüche enthalten bevorzugte Ausführungsbeispiele.

Das erfindungsgemäße Identifikationsmodul mit den Merkmalen des Anspruchs 1 hat den Vorteil, dass das Identifikationsmodul eine besonders hohe Lebensdauer aufweist und insbesondere über die Lebensdauer des Energiespeichers hinaus verwendet werden kann. Es wird erreicht, dass ein Austausch des gesamten Identifikationsmoduls, wenn die elektrische Kapazität des Energiespeichers erschöpft ist, nicht notwendig ist. Erfindungsgemäß wird dies dadurch erreicht, dass das Gehäuse eine Öffnung zu einer Kammer und einen Deckel aufweist, wobei die Öffnung durch den Deckel verschließbar ist, und dass in der Kammer der Energiespeicher durch die Öffnung entnehmbar angeordnet ist. Die Erfindung sieht also vor, dass der Energiespeicher des Identifikationsmoduls austauschbar ist. Hierzu ist die Öffnung durch den Deckel verschließbar und bei Bedarf freigebbar, durch Entfernen des Deckels, sodass ein Benutzer den Energiespeicher durch die Öffnung hindurch aus dem Gehäuse entnehmen und durch einen aufgeladenen Energiespeicher ersetzen kann. Verschließt der Deckel die Öffnung, so ist der Energiespeicher sicher in der Kammer aufbewahrt. Wird der Deckel entfernt, lässt sich der Energiespeicher leicht austauschen. Damit erübrigt sich ein Austausch des gesamten Identifikationsmoduls, wenn sich die Kapazität des Energiespeichers erschöpft hat.

Gemäß einer bevorzugten Weiterbildung der Erfindung ist vorgesehen, dass der Deckel durch einen Bajonettverschluss lösbar an dem Gehäuse die Öffnung verschließend gehalten ist. Der Bajonettverschluss lässt sich leicht betätigen und gewährleistet dennoch einen sicheren Verschluss der Öffnung. Alternativ könnte der Deckel auch durch einen Schraubverschluss an dem Gehäuse befestigt sein. Auch ist es denkbar, den Deckel an dem Gehäuse verschwenkbar zu lagern und an der der Schwenkachse gegenüberliegenden Seite durch Verrasten, Verschrauben, Verklemmen oder Verspannen an dem Gehäuse lösbar zu arretieren.

Weiterhin ist erfindungsgemäß vorgesehen, dass in oder an dem Gehäuse eine den Transponder tragende Leiterplatte angeordnet ist. Durch die Leiterplatte ist der Transponder außerdem elektrisch kontaktierbar, wobei über die Leiterplatte insbesondere auch der elektrische Kontakt vom Transponder zum Energiespeicher herstellbar und bevorzugt hergestellt ist.

Erfindungsgemäß ist die Leiterplatte die Kammer auf der der Öffnung gegenüberliegenden Seite verschließend angeordnet, insbesondere unter Zwischenschaltung wenigstens eines Dichtelements. Vorzugsweise ist vorgesehen, dass zwischen Kammer und Leiterplatte ein ringförmiges Dichtelement, beispielsweise ein O-Ring oder -Steg angeordnet ist, der insbesondere elastisch verformbar ausgebildet ist. Das Dichtelement ist dabei erfindungsgemäß einstückig mit dem Gehäuse oder mit der Leiterplatte ausgebildet, oder kann (nicht erfindungsgemäß) als separates Bauteil vorliegen. Dadurch wird gewährleistet, dass der Innenraum der Kammer, in welchem der Energiespeicher und insbesondere auch der Transponder angeordnet sind, sicher vor äußeren Einflüssen geschützt ist. Vor der Montage ist die Kammer somit an zwei Seiten geöffnet, einerseits durch die Öffnung und andererseits durch die von der Leiterplatte zu verschließenden Aussparung. Dadurch ist das Gehäuse einfach und kostengünstig herstellbar, und das Identifikationsmodul ist einfach montierbar.

Gemäß einer bevorzugten Weiterbildung der Erfindung ist vorgesehen, dass die Leiterplatte in das Gehäuse eingeklipst ist. Die Leiterplatte ist somit durch Verrastung an/in dem Gehäuse befestigt, wobei die Haltekraft insbesondere durch das elastisch verformbare Dichtelement gewährleistet wird. So weist das Gehäuse vorzugsweise seitlich in die Aussparung hineinragende Rastnasen auf, die durch das Einführen der Leiterplatte zurückgedrängt werden können. Sobald die Rastnasen durch die Leiterplatte überwunden wurden, gelangen sie aufgrund ihrer Eigenelastizität zurück in ihre Ausgangsposition, in welcher sie die Leiterplatte hintergreifen. Das dabei bereits gestauchte Dichtelement drängt dann die Leiterplatte zurück gegen die Rastvorsprünge, sodass die Leiterplatte zwischen den Rastvorsprüngen und dem Dichtelement arretiert, insbesondere spielfrei gehalten ist. Vorzugsweise sind mehrere Rastelemente gleichmäßig über den Umfang der Aussparung verteilt angeordnet, um eine sichere Arretierung der Leiterplatte zu gewährleisten.

Ferner ist erfindungsgemäß vorgesehen, dass die von der Kammer abgewandte Rückseite der Leiterplatte mit einer Vergussmasse an dem Gehäuse abgedichtet ist. Die Vergussmasse dichtet die Rückseite der Leiterplatte mit dem Gehäuse ab, sodass die Kammer sicher vor äußeren Einflüssen geschützt ist. Das insbesondere vorgesehene Dichtelement gewährleistet dabei, dass die Vergussmasse nicht bis in die Kammer vordringen kann. Die Vergussmasse ist insbesondere aus elektrisch nicht-leitfähigem Material gefertigt, sodass sie auch auf der Rückseite der Leiterplatte vorgesehene elektrische Kontakte sicher abdichtet und voneinander und von der Umgebung trennt beziehungsweise isoliert.

Weiterhin ist bevorzugt vorgesehen, dass das Gehäuse wenigstens einen Ausrichtungsvorsprung aufweist, der mit einer Ausrichtungsaussparung der Leiterplatte zur eindeutigen Anordnung/Ausrichtung der Leiterplatte in/an dem Gehäuse zusammenwirkt. Durch die eindeutige Anordnung/Ausrichtung wird gewährleistet, dass die Leiterplatte in nur einer Art und Weise in das Gehäuse einbringbar ist. Es wird insofern eine sogenannte Poka-Yoke-Verbindung bereitgestellt, die einen Falscheinbau der Leiterplatte in/an dem Gehäuse sicher verhindert. Vorzugsweise ist der Ausrichtungsvorsprung als Rippe oder Steg ausgebildet, die sich in Einschubrichtung der Leiterplatte in Richtung der Kammer erstreckt und bei korrekter Montage in der Ausrichtungsaussparung der Leiterplatte einliegt. Alternativ oder zusätzlich kann der Ausrichtungsvorsprung an der Leiterplatte und die Ausrichtungsaussparung in dem Gehäuse ausgebildet sein.

Gemäß einer bevorzugten Weiterbildung der Erfindung ist vorgesehen, dass der Energiespeicher zur elektrischen Berührungskontaktierung federbeaufschlagt ist. Durch die Federbeaufschlagung wird eine sichere Berührungskontaktierung des Energiespeichers auch im Betrieb beispielsweise einer Handwerkzeugmaschine, an welcher das Identifikationsmodul angeordnet ist, gewährleistet. Die Federkraft wird dabei bevorzugt von einem elektrischen Kontaktelement selbst, insbesondere einer Kontaktfeder, zur Verfügung gestellt, die an der Leiterplatte und/oder an dem Gehäuse gehalten ist. Alternativ kann auch vorgesehen sein, dass zwischen Deckel und Energiespeicher ein Federelement, beispielsweise eine Schraubenfeder anordenbar oder angeordnet ist, um den Energiespeicher bei verschlossenem Deckel gegen die Leiterplatte und gegen dort vorgesehene Kontaktanschlüsse zu drängen.

Weiterhin ist bevorzugt vorgesehen, dass Gehäuse außenseitig wenigstens eine Befestigungsöse zur Befestigung einer Adapterplatte und/oder zur Befestigung an einem Mobilgerät aufweist. An der oder den Befestigungsösen kann eine zusätzliche Adapterplatte angeordnet werden, beispielsweise mittels Schnappverbinder, die an der Adapterplatte angeordnet sind. Die Adapterplatte ermöglicht beispielsweise das Anordnen des Identifikationsmoduls in unterschiedlichen mobilen Gegenständen, insbesondere Handwerkzeugmaschinen. Vorzugsweise weist die Leiterplatte wenigstens eine Fixierung für externe Kabel/Kabelverbindungen auf. Die Fixierung kann beispielsweise als Schelle oder als Scharnier ausgebildet sein. Das Gehäuse kann alternativ oder zusätzlich zu den Befestigungsösen eine Klebefläche aufweisen, an welcher das Gehäuse an dem mobilen Gegenstand verklebbar ist. Auch ist es denkbar, das Gehäuse an der Adapterplatte festzukleben.

Besonders bevorzugt ist vorgesehen, dass das Identifikationsmodul eine Diebstahlwarnvorrichtung aufweist. Die Diebstahlwarneinrichtung dient insbesondere dazu, den Benutzer darauf hinzuweisen, wenn das Identifikationsmodul von dem Gegenstand entfernt wurde. Die Diebstahlwarnvorrichtung kann dabei einen mechanisch betätigbaren Schalter aufweisen, der bei der Montage des Identifikationsmoduls betätigt und durch die Montage betätigt gehalten wird. Wird das Gehäuse von dem Gegenstand entfernt, endet die Betätigung des Schalters und der Transponder sendet beispielsweise automatisch ein Warnsignal aus. Alternativ kann vorgesehen sein, eine elektrische Verbindung des Identifikationsmoduls beispielsweise außerhalb des Gehäuses anzuordnen, insbesondere in der Vergussmasse, sodass sie bei Entfernen des Identifikationsmoduls von dem mobilen Gegenstand zerstört wird. Der unterbrochene elektrische Kontakt löst dann ein Warnsignal aus, das beispielsweise von dem Transponder ausgesendet wird.

Im Folgenden soll die Erfindung anhand der Zeichnung näher erläutert werden. Dazu zeigen
- Figur 1: ein Identifikationsmodul für eine Handwerkzeugmaschine in einer perspektivischen Draufsicht,
- Figur 2: das Identifikationsmodul in einer Schnittdarstellung,
- Figur 3: einen Deckel des Identifikationsmoduls,
- Figur 4: eine erste Unteransicht des Identifikationsmoduls in einem Vormontagezustand und
- Figur 5: eine zweite Unteransicht des Identifikationsmoduls in einem weiteren Vormontagezustand.

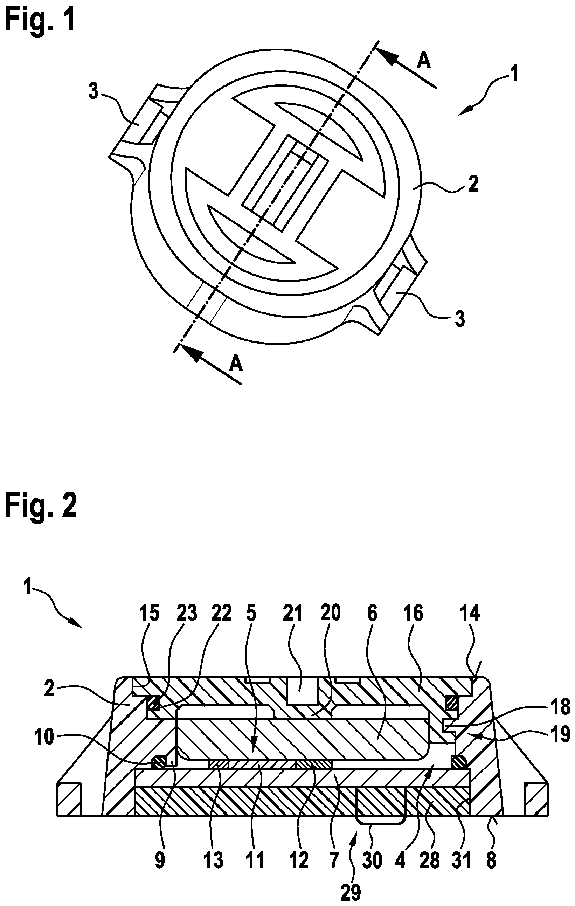

Figur 1 zeigt in einer perspektivischen Draufsicht ein Identifikationsmodul 1 für einen mobilen Gegenstand, insbesondere für eine Handwerkzeugmaschine. Das Identifikationsmodul 1 weist ein Gehäuse 2 auf, an welchem an einander diametral gegenüberliegenden Seiten Befestigungsösen 3 zur Befestigung des Identifikationsmoduls 1 an der Handwerkzeugmaschine/Gegenstand oder zur Befestigung einer Adapterplatte an dem Identifikationsmodul 1 angeordnet oder ausgebildet sind.

Figur 2 zeigt eine Schnittdarstellung durch das Identifikationsmodul 1 aus Figur 1 entlang der Linie A-A in Figur 1.

Das Gehäuse 2 weist eine Kammer 4 auf, in welcher ein Transponder 5, ein Energiespeicher 6 sowie eine Leiterplatte 7 angeordnet sind. Die Kammer 4 ist dabei an zwei gegenüberliegenden Stirnseiten des Gehäuses 2 zunächst offen ausgebildet. Die Leitplatte 7 ist von der Unterseite 8 des Gehäuses 2 in eine Aussparung 31 zur Kammer 4 des Gehäuses 2 eingesetzt. Dabei weist das Gehäuse 2 auf der Innenseite der Kammer einen in die Kammer 4 ragenden, ringförmigen Vorsprung 9 auf, an welchen die Leiterplatte 7 unter Zwischenschaltung eines elastisch verformbaren und ringförmigen Dichtelements 10 anliegt. Dadurch wird die Kammer 4 letztendlich auf der Unterseite des Gehäuses 2 durch die Leiterplatte 7 selbst verschlossen. Der Transponder 5 ist auf der Seite der Leiterplatte 7 angeordnet, die der Kammer 4 zugewandt ist.

Der Transponder 5 weist ein Funkmodul 11, das zum Senden und Empfangen von Daten ausgebildet ist, sowie einen Datenspeicher 12, in welchem Identifikationsdaten hinterlegbar sind, auf. Auf der Leiterplatte 7 sind weiterhin elektrische Kontakte 13 zur Berührungskontaktierung des Energiespeichers 6, der vorliegend als Knopfzelle ausgebildet ist.

Die zur Oberseite 14 des Gehäuses zugeordnete Öffnung 15 der Kammer 4 ist durch einen Deckel 16 verschlossen.

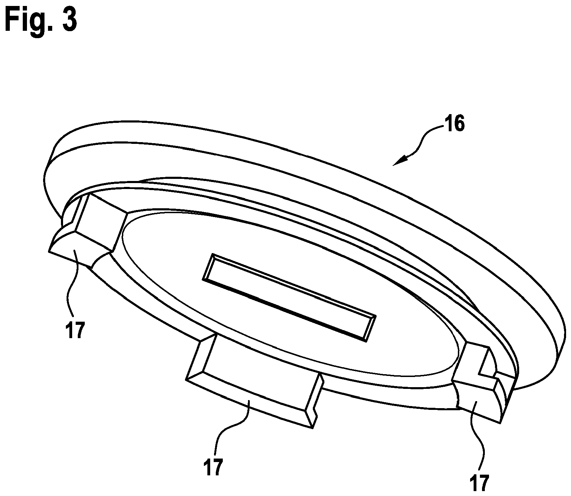

Figur 3 zeigt den Deckel 16 in einer perspektivischen Darstellung. Der Deckel 16 weist eine kreisförmige Kontur auf und ist an einer Seite mit Hintergriffelementen 17 versehen, die mit damit korrespondierenden Hintergriffgegenelementen 18 des Gehäuses 2 zusammenwirkt, wenn der Deckel 16 in die Öffnung 15 eingesetzt ist und verdreht wird, sodass die Hintergriffelemente 17 in Hintergriff mit den Hintergriffgegenelementen 18 gelangen. Der Deckel 16 bildet somit zusammen mit dem Gehäuse 2 einen Bajonettverschluss 19, der ein einfaches Befestigen und Lösen des Deckels 16 an dem Gehäuse 2 erlaubt. Bevorzugt weisen die Hintergriffelemente 17 und/oder die Hintergriffgegenelemente 18 jeweils eine Schräge auf, die dazu führt, dass, wenn der Deckel 16 in die Schließposition verdreht wird, eine Kraft erzeugt wird, welche den Deckel 16 in Richtung der Kammer 4 drängt. Die Unterseite des Deckels 16 beziehungsweise die der Kammer 4 zugeordnete Seite des Deckels 16 ist dabei derart gestaltet, dass sie wenigstens einen Vorsprung 20 aufweist, der in Anlagekontakt mit dem Energiespeicher 6 gelangt, und den Energiespeicher 6 in Richtung der Leiterplatte 7 drängt, sodass eine sichere elektrische Verbindung zwischen Energiespeicher 6 und Leiterplatte 7 beziehungsweise Kontaktelementen 13 dauerhaft gewährleistet ist. Durch die Schrägen wird erreicht, dass der Energiespeicher 6 gegen die Leiterplatte 7 vorgespannt in der Kammer 4 gehalten ist. Der Energiespeicher ist insoweit durch den Deckel 16 federbeaufschlagt in der Kammer zur Berührungskontaktierung angeordnet. Alternativ oder zusätzlich ist zwischen Deckel 16 und Energiespeicher 6 ein Federelement vorgespannt gehalten.

Auf der der Kammer 4 abgewandten Seite weist der Deckel 16 eine schlitzförmige Aussparung 21 auf, in welche ein Werkzeug, beispielsweise ein Schraubendreher oder eine Münze, einsteckbar ist, um den Deckel zum Lösen oder Verschließen des Bajonettverschlusses zu verdrehen. An seiner radialen Mantelaußenwand weist der Deckel 16 außerdem eine Vertiefung 22 auf, in welcher ein Dichtring, insbesondere O-Ring 23 angeordnet ist, der im montierten Zustand vorgespannt radial zwischen dem Deckel 16 und der Innenseite des Gehäuses 2 dichtend angeordnet ist.

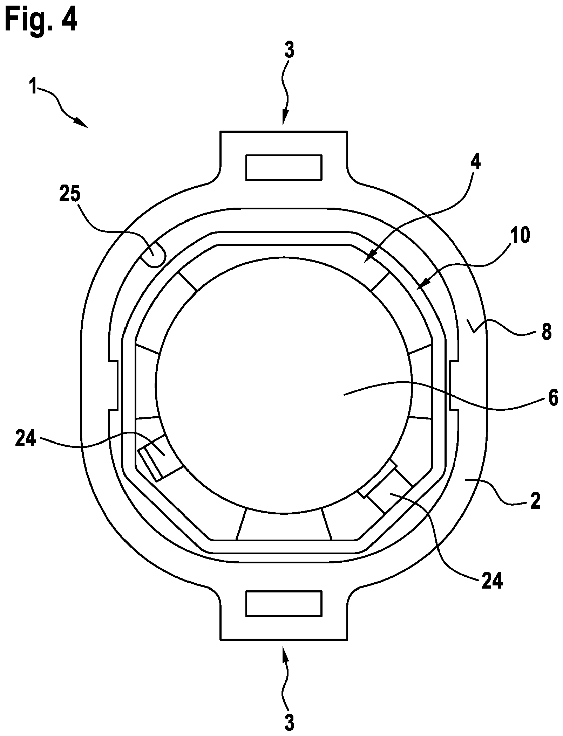

Figur 4 zeigt eine Draufsicht auf die Unterseite 8 des Identifikationsmoduls 1. Dabei sind nur das ringförmige Dichtelement 10 und die Unterseite des Energiespeichers 6 zu erkennen. In dem in Figur 4 dargestellten Montagezustand ist die Leiterplatte 7 mit dem drauf angeordneten Transponder 5 noch nicht installiert/montiert. In dem Gehäuse 2 sind Nuten 24 zur Aufnahme von hier nicht dargestellten Federelementen ausgebildet, wobei die Federelemente insbesondere zur Halterung und gegebenenfalls Vorspannung und elektrischer Kontaktierung des Energiespeichers 6 dienen.

Weiterhin ist zu erkennen, dass das Gehäuse 2 einen in die Kammer 4 hineinragenden Ausrichtungsvorsprung 25 aufweist, der insbesondere als Ausrichtungssteg ausgebildet ist.

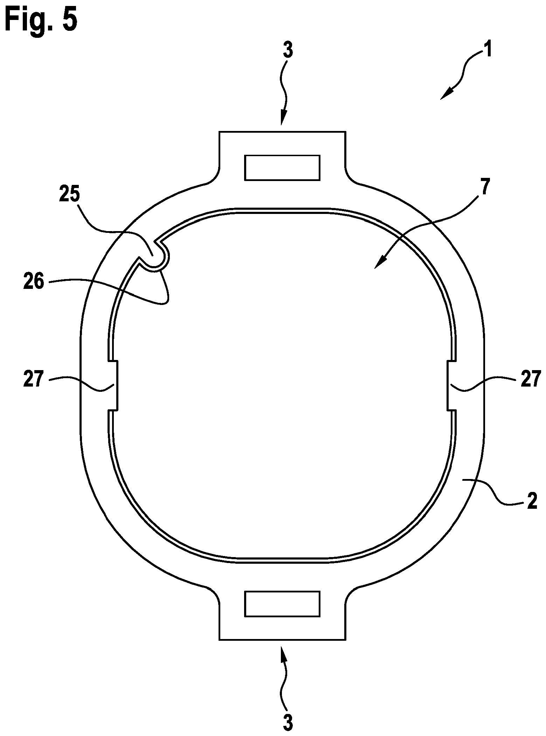

Figur 5 zeigt eine weitere Draufsicht auf die Unterseite 8 des Identifikationsmoduls 1, wobei in diesem Montagezustand die Leiterplatte 7 bereits in die Aussparung 31 des Gehäuses 2 eingesetzt ist. Die Leiterplatte 7 weist dabei eine Ausrichtungsaussparung 26 auf, die korrespondierend zu dem Ausrichtungsvorsprung 25 ausgebildet ist, sodass die Leiterplatte 7 nur auf eine Art und Weise in die Kammer 4 einsetzbar ist. Der Ausrichtungsvorsprung 25 und die Ausrichtungsaussparung 26 bewirken somit eine Poka-Yoke-Verbindung zwischen Leiterplatte 7 und Gehäuse 2, die einen korrekten Einbau der Leiterplatte 7 gewährleistet, weil eine Falschmontage nicht möglich ist.

Das Gehäuse 2 weist weiterhin zwei in der Kammer 4 gegenüberliegend angeordnete Rastvorsprünge 27 auf, die elastisch verformbar ausgebildet sind.

Dabei sind die Rastvorsprünge 27 derart angeordnet, dass die Leiterplatte 7 beim Einbringen in die Kammer 4 eingeklipst wird, sodass die Rastvorsprünge 27 zunächst elastisch verformt und, nachdem die Leiterplatte 7 die Rastvorsprünge 27 passiert hat, aufgrund ihrer Eigenelastizität in ihren Ausgangszustand zurückspringen und dadurch die Leiterplatte 7 von hinten formschlüssig hintergreifen. Die Leiterplatte 7 ist somit die Aussparung 31 verschließend in dem Gehäuse 7 formschlüssig gehalten.

Wie aus Figur 2 ersichtlich wird im letzten Montageschritt die Rückseite der Leitplatte 7 im Gehäuse 2 mit einer elektrisch isolierenden Vergussmasse 28 versehen, sodass die Leiterplatte 7 an dem Gehäuse 2 versiegelt ist. Die Vergussmasse ist vorzugsweise aus Silikon gefertigt und metallpartikelfrei. Das Dichtelement 10 verhindert, dass Vergussmasse in das Innere der Kammer 4 gelangen kann. Die Vergussmasse 28 dichtet die Kammer 4 endgültig ab und bietet einen sicheren Schutz, auch für die Rückseite der Leiterplatte und dort gegebenenfalls vorhandene elektrischer Leiter.

Im Betrieb kann das Identifikationsmodul 1 auf Anfrage mittels des Funkmoduls 11 die in dem Datenspeicher 12 hinterlegten Identifikationsdaten drahtlos zur Verfügung stellen. Vorzugsweise ist dazu dem Funkmodul eine Steuereinheit/Recheneinheit zugeordnet oder in das Funkmodul 11 integriert ausgebildet.

Weiterhin ist bevorzugt vorgesehen, dass an den Außenflächen des Gehäuses 2 und des Deckels 16 eine Oberflächenbeschichtung in der Art einer Softkomponente vorgesehen ist, um das Identifikationsmodul vor Kratzern zu schützen. Auch kann die Softkomponente zur Stoßdämpfung genutzt werden. Dies ist insbesondere dann von Vorteil, wenn der Deckel 16 bündig mit dem Gehäuse 2 abschließt. Alternativ kann der Deckel 16 in das Gehäuse 2 versenkt angeordnet sein, wobei dann auf eine Softkomponente auf dem Deckel 16 verzichtet werden kann.

Das Gehäuse 2 weist vorliegend eine rechteckige Grundform mit abgerundeten Ecken auf. Alternativ kann das Gehäuse 2 jedoch auch oval oder kreisförmig ausgebildet sein. Auch ist es denkbar, dass die Unterseite 8 des Gehäuses 2 eine konkave oder konvexe Oberfläche aufweist, um das Identifikationsmodul 1 auch an gekrümmten Flächen anbringen, insbesondere ankleben zu können. Die Außenflächen des Gehäuses 2 sind bevorzugt abgeschrägt ausgebildet, sodass bei einer seitlichen Krafteinwirkung auf das Gehäuse 2 nur geringe Scherkräfte, insbesondere an der Klebeverbindung zwischen dem Identifikationsmodul 1 und dem zu identifizierenden Gegenstand, entstehen, weil das die Krafteinwirkung aufbringende Werkzeug, beispielsweise ein Hammer, an den abgeschrägten Oberflächen abrutscht. Die Befestigungsösen 3 können auch dazu benutzt werden, das Identifikationsmodul mittels Kabelbindern an Gegenständen zu befestigen, wodurch auf ein Verkleben verzichtet werden und die Montage des Identifikationsmoduls an dem jeweiligen Gegenstand beschleunigt werden kann. Auch kann dadurch das Identifikationsmodul 1 beispielsweise an einem oder mehreren Kabeln, beispielsweise an einem Kabelbaum, angebracht werden.

Alternativ kann an den Befestigungsösen 3, wie zuvor bereits erwähnt, eine zusätzliche Adapterplatte befestigt werden, beispielsweise per Schnappverbindung, wobei die Adapterplatte vorteilhaft zur Anbringung an einen gewünschten Gegenstand ausgebildet ist. So weist die Adapterplatte beispielsweise eine Schelle oder ein Scharnier zur Fixierung an Netzleitungen auf. Alternativ zu dem Vorsehen der Befestigungsösen 3 kann auch vorgesehen sein, dass die Adapterplatte an einem umlaufenden Kragen des Gehäuses 2 befestigt wird. Auch kann das Gehäuse 2 mit der Adapterplatte alternativ oder zusätzlich verklebt werden.

Vorteilhafterweise wird das Identifikationsmodul 1 außerdem mit einer Diebstahlwarnvorrichtung 29 versehen, der ein Entfernen des Identifikationsmoduls 1 von einem Gegenstand erkennt. Die Diebstahlwarnvorrichtung 29 weist dazu beispielsweise eine flexible Leiterbahn 30 auf, die bei Entfernung des Identifikationsmoduls 1 von dem Gegenstand abgerissen oder zerstört wird, sodass ein durch die Leiterbahn gebildeter Stromkreis unterbrochen wird. Dies kann durch eine geeignete Software oder Schaltung detektiert und entsprechend gemeldet werden. Anstelle einer flexiblen Leiterbahn kann auch eine Drahtschleife vorgesehen sein. Auch ist es denkbar, einen Taster oder Schalter an dem Gehäuse 2 derart anzuordnen, dass er beim Anbringen des Identifikationsmoduls 1 an dem Gegenstand betätigt wird. Wird das Identifikationsmodul 1 entfernt, so geht der Schalter oder Taster in seine Ausgangsstellung zurück. Dies kann ebenfalls durch eine Software oder eine entsprechende Schaltung detektiert und gemeldet werden. So kann einem Benutzer ein Diebstahl des Identifikationsmoduls beispielsweise durch das Aussenden einer Warnmeldung mittels des Funkmoduls 12 an ein Mobiltelefon des Benutzers gemeldet werden.

Vorzugsweise weist das Identifikationsmodul 1 außerdem eine hier nicht dargestellte Schnittstelle zur drahtgebundenen oder drahtlosen Kommunikation mit beispielsweise einem Elektrohandwerkzeug auf. Auch ist es denkbar, dass das Identifikationsmodul 1 dazu ausgebildet ist, drahtlos mit anderen Identifikationsmodulen, insbesondere solchen, die sich in der Reichweite des Funkmoduls 12 befinden, zu kommunizieren.

Bevorzugt weist das Identifikationsmodul 1 einen weiteren Energiespeicher, insbesondere Batterie oder Akkumulator auf, der gegebenenfalls mit unterschiedlicher Kapazität in der Kammer 4 angeordnet ist und gewährleistet, dass bei einem Wechsel des Energiespeichers 6 keine Stromunterbrechung erfolgt und das Identifikationsmodul 1 unterbrechungsfrei weiter betrieben werden kann.

## Patentansprüche

1. Identifikationsmodul (1) für Mobilgeräte,
wobei das Identifikationsmodul (1) ein Gehäuse (2), einen Transponder (5), einen Energiespeicher (6) und eine den Transponder (5) tragende oder mit dem Transponder (5) verbundene Leiterplatte (7) aufweist,
wobei das Gehäuse (2) eine Öffnung (15), eine Kammer (4), eine der Öffnung (15) gegenüberliegende Aussparung (31) und Mittel zur Anordnung oder Befestigung des Identifikationsmoduls (1) an einem Mobilgerät aufweist, wobei der Transponder (5) einen Datenspeicher zum Speichern von Identifikationsdaten sowie ein Funkmodul (11) zum Versenden der Identifikationsdaten aufweist und mittels des Energiespeichers (6) mit Energie versorgt wird, wobei die Kammer (4) einerseits durch die Öffnung (15) und anderseits durch die Aussparung (31) begrenzt ist, und
wobei der Energiespeicher (6) durch die Öffnung (15) entnehmbar angeordnet ist und die Öffnung (15) durch einen Deckel (16) verschließbar ist, **dadurch gekennzeichnet, dass** in der Aussparung (31) des Gehäuses (2) die Leiterplatte (7) angeordnet ist, die die Kammer (4) unter Zwischenschaltung eines Dichtelements (10) verschließt, wobei die von der Kammer (4) abgewandte Rückseite der Leiterplatte (7) mit einer Vergussmasse (28) abgedichtet ist.

2. Identifikationsmodul nach Anspruch 1, **dadurch gekennzeichnet, dass** der Deckel (16) durch einen Bajonettverschluss (19) lösbar an dem Gehäuse (2) die Öffnung (16) verschließend befestigbar ist.

3. Identifikationsmodul nach einem der vorhergehenden Ansprüche, **dadurch gekennzeichnet, dass** die Leiterplatte (7) in das Gehäuse (2) eingeklipst ist.

4. Identifikationsmodul nach einem der vorhergehenden Ansprüche, **dadurch gekennzeichnet, dass** das Gehäuse (2) wenigstens einen Ausrichtungsvorsprung (25) aufweist, der mit einer Ausrichtungsaussparung (26) oder mit einem Ausrichtungsvorsprung der Leiterplatte (7) zur eindeutigen Anordnung der Leiterplatte (7) in dem Gehäuse (2) zusammenwirkt.

5. Identifikationsmodul nach einem der vorhergehenden Ansprüche, **dadurch gekennzeichnet, dass** der Energiespeicher (6) zur elektrischen Berührungskontaktierung federbeaufschlagt in der Kammer (4) angeordnet ist.

6. Identifikationsmodul nach einem der vorhergehenden Ansprüche, **dadurch gekennzeichnet, dass** das Gehäuse (2) außenseitig wenigstens eine Befestigungsöse (3) zum Befestigen einer Adapterplatte und/oder zur Befestigung an dem Mobilgerät aufweist.

## Claims

1. Identification module (1) for mobile devices, wherein the identification module (1) has a housing (2), a transponder (5), an energy storage device (6) and a printed circuit board (7) that carries the transponder (5) or that is connected to the transponder (5), wherein the housing (2) has an opening (15), a chamber (4), a recess (31) opposite the opening (15) and means for arranging or fastening the identification module (1) on/to a mobile device,
wherein the transponder (5) has a data storage device for storing identification data and a radio module (11) for wirelessly transmitting the identification data and is supplied with energy by means of the energy storage device (6),
wherein the chamber (4) is delimited on the one hand by the opening (15) and on the other hand by the recess (31), and
wherein the energy storage device (6) is arranged so as to be removable through the opening (15) and the opening (15) can be closed by a cover (16),
**characterized in that** the printed circuit board (7) is arranged in the recess (31) of the housing (2) and closes the chamber (4) with the interposition of a sealing element (10), wherein the back side of the printed circuit board (7) that faces away from the chamber (4) is sealed by means of an encapsulation compound (28).

2. Identification module according to Claim 1, **characterized in that** the cover (16) can be detachably fastened to the housing (2), closing the opening (16), by a bayonet joint (19).

3. Identification module according to either one of the preceding claims, **characterized in that** the printed circuit board (7) is clipped into the housing (2).

4. Identification module according to any one of the preceding claims, **characterized in that** the housing (2) has at least one alignment projection (25), which acts in combination with an alignment recess (26) or with an alignment projection of the printed circuit board (7) for the purpose of positively arranging the printed circuit board (7) in the housing (2).

5. Identification module according to any one of the preceding claims, **characterized in that** the energy storage device (6) is arranged, spring-loaded for the purpose of electrical touch contacting, in the chamber (4) .

6. Identification module according to any one of the preceding claims, **characterized in that** the housing (2), on the outside, has at least one fastening lug (3) for fastening an adapter plate and/or for fastening to the mobile device.

## Revendications

1. Module d'identification (1) destiné à des appareils mobiles,
le module d'identification (1) comportant un boîtier (2), un transpondeur (5), un accumulateur d'énergie (6) et une carte de circuit imprimé (7) portant le transpondeur (5) ou reliée au transpondeur (5),
le boîtier (2) comportant une ouverture (15), une chambre (4), un évidement (31) en regard de l'ouverture (15) et des moyens destinés à disposer ou fixer le module d'identification (1) au niveau d'un appareil mobile,
le transpondeur (5) comportant une mémoire de données destinée à mémoriser des données d'identification et un module radio (11) destiné à envoyer les données d'identification et étant alimenté en énergie au moyen de l'accumulateur d'énergie (6),
la chambre (4) étant délimitée d'une part par l'ouverture (15) et d'autre part par l'évidement (31), et
l'accumulateur d'énergie (6) étant disposé de manière à pouvoir être retiré par l'ouverture (15) et l'ouverture (15) pouvant être fermée par un couvercle (16), **caractérisé en ce que** la carte de circuit imprimé (7), qui ferme la chambre (4) avec interposition d'un élément d'étanchéité (10), est disposée dans l'évidement (31) du boîtier (2), la face arrière, dirigée à l'opposé de la chambre (4), de la carte de circuit imprimé (7) étant étanchéifiée avec un composé d'enrobage (28).

2. Module d'identification selon la revendication 1, **caractérisé en ce que** le couvercle (16) peut être fixé de manière amovible au boîtier (2) de manière à fermer l'ouverture (16) par une fermeture à baïonnette (19).

3. Module d'identification selon l'une des revendications précédentes, **caractérisé en ce que** la carte de circuit imprimé (7) est clipsée dans le boîtier (2).

4. Module d'identification selon l'une des revendications précédentes, **caractérisé en ce que** le boîtier (2) comporte au moins une saillie d'orientation (25) qui coopère avec un évidement d'orientation (26) ou avec une saillie d'orientation de la carte de circuit imprimé (7) afin de disposer de manière définie la carte de circuit imprimé (7) dans le boîtier (2).

5. Module d'identification selon l'une des revendications précédentes, **caractérisé en ce que** l'accumulateur d'énergie (6) est disposé dans la chambre (4) sous la contrainte d'un ressort afin d'établir un contact électrique.

6. Module d'identification selon l'une des revendications précédentes, **caractérisé en ce que** le boîtier (2) comporte du côté extérieur au moins un œillet de fixation (3) destiné à fixer une plaque adaptatrice et/ou à être fixé à l'appareil mobile.
